# DEMANDE DE BREVET EUROPEEN

(11) **EP 4 585 352 A1**
(43) Date de publication de la demande: **16.07.2025**
(21) Numéro de dépôt: 24222199.2
(22) Date de dépôt: 20.12.2024
(51) Int. Cl.: B23K 26/00, B23K 26/352, B23K 26/362, B23K 26/402, B44C 1/22, B60Q 1/00, B23K 26/082, B23K 101/00, B23K 103/00

(54) **PROCÉDÉ DE FABRICATION D'UNE PIÈCE DE VÉHICULE TRANSPARENTE OU TRANSLUCIDE**

(30) Priorité: 22.12.2023 FR 2315193
(71) Demandeur: OPmobility SE, 69007 Lyon (FR)
(72) Inventeur: ANDRE, Gérald, 01150 SAINTE-JULIE (FR)
(74) Mandataire: LLR

(57) **Abrégé**

L'invention concerne un procédé de fabrication d'une pièce de carrosserie (2) de véhicule automobile caractérisé en ce qu'il comprend les étapes suivantes :
- dépôt d'au moins un revêtement opaque sur au moins une partie d'une face (6) d'un corps principal (3) de la pièce de carrosserie (2), le corps principal (3) étant en matière plastique transparente ou translucide, et
- réalisation d'un ensemble de microperforations (8, 10) du revêtement opaque par retrait du revêtement opaque à l'aide d'un faisceau laser irradiant localement le revêtement opaque, une trajectoire d'irradiation (12, 16, 22) du faisceau laser étant constituée uniquement de lignes de trajectoires (12', 16', 22') successives sensiblement rectilignes.

## Description

L'invention concerne une pièce de véhicule automobile. Plus particulièrement, l'invention concerne un procédé de fabrication d'une pièce de véhicule transparente ou translucide et contribuant à l'aspect extérieur du véhicule et un dispositif pour réaliser un tel procédé.

Un véhicule comprend plusieurs pièces transparentes ou translucides destinées à transmettre de la lumière. Il s'agit notamment des pièces utilisées à des fins d'éclairage réglementaire, par exemple celles protégeant les blocs optiques des feux de route et de croisement ou bien des feux clignotants. Par ailleurs, le véhicule peut également présenter des sources de lumière prévues à des fins décoratives qui améliorent l'esthétique du véhicule.

A ces fins, il est possible de traiter une surface externe ou une face interne des pièces en matière plastique transparente ou translucide afin d'améliorer leur aspect. Une possibilité pour ce faire consiste à surmouler un film ou masque opaque sur la surface externe de la pièce, le film opaque présentant un motif prédéfini permettant le passage de la lumière. De la sorte, lorsque la source de lumière associée à la pièce émet de la lumière, cette dernière est partiellement bloquée par l'opacité du film opaque et partiellement transmise par les parties de la pièce qui sont en regard du motif. Cela permet d'améliorer l'esthétique du faisceau lumineux transmis, par la pièce transparente ou translucide, de la source de lumière vers l'environnement extérieur. Un film opaque tel que décrit ci-dessus peut poser des problèmes de correspondance de couleur avec la peinture des autres pièces du véhicule, ce qui a un impact négatif sur l'esthétique du véhicule.

Il est également connu de peindre la face externe ou interne d'un panneau de carrosserie transparent ou translucide puis de retirer une partie plus ou moins importante de la couche de peinture déposée, par exemple en réalisant des microperforations ou des zones de taille plus importante à l'aide d'un laser sur la couche de peinture afin de dégager des zones de toute peinture et les rendre transparentes ou translucides. Le but recherché est de laisser passer une lumière provenant de l'arrière de la pièce de carrosserie.

Dans le cas de microperforations, ces dernières sont dimensionnées et réparties sur le panneau de carrosserie de manière à laisser passer une lumière visible émise depuis une face interne du panneau de carrosserie vers l'extérieur du panneau de carrosserie tout en ne permettant pas, lorsque la ou les sources de lumières sont éteintes, de voir au travers du panneau de carrosserie depuis l'extérieur du véhicule tout en conservant un aspect d'ensemble proche d'une pièce de carrosserie peinte sans retrait de peinture de la pièce de carrosserie du fait de la petite taille des microperforations.

Les microperforations réalisées à l'aide d'un laser sont classiquement de forme sensiblement circulaire et le nombre de microperforations peut être relativement important sur une surface traitée. En effet, les zones aptes à laisser passer la lumière peuvent mesurer de quelques centimètres à plusieurs dizaines de centimètres et les microperforations peuvent avoir une taille allant de 20 à 1000 micromètres, de préférence comprise entre 50 et 700 micromètres, de préférence comprise entre 100 et 300 micromètres, et peuvent être espacées les unes des autres d'une distance comprise entre 1 et 4 fois la taille des microperforations, de préférence entre 2 et 3 fois la taille des microperforations, de préférence sensiblement égale à 2 fois la taille des microperforations. La réalisation de microperforations circulaires en très grand nombre présente plusieurs inconvénients :
- Le temps de cycle par microperforation réalisée est assez long, cela étant dû à la forme circulaire des microperforations. Classiquement, cette forme est obtenue par la réalisation ce cercles concentriques par le laser, ou par balayage circulaire du contour du cercle par le laser puis balayage par des trajectoires rectilignes à l'intérieur du contour défini. Ces deux options conduisent à avoir un temps de cycle important par microperforation. Etant donné le nombre important de microperforations pouvant être réalisées au niveau d'un panneau pour obtenir l'effet visuel souhaité (compte tenu de taille des microperforations et de leur espacement sur une surface telle que décrite ci-dessus), et pouvant être d'au moins 4 microperforations par mm², soit 40 000 microperforations sur une surface carrée de 100 millimètres de côté, le temps de cycle pour obtenir le panneau de carrosserie finale peut être important (la problématique du temps de cycle important apparaissant lorsqu'on réalise au moins 5 000 à 10 000 microperforations, tout en sachant que l'on souhaite avoir un temps de cycle inférieur à 5 minutes, de préférence compris entre 1 et 2 minutes).
- La programmation du robot portant le laser est assez complexe, ce qui conduit à l'obtention de fichiers de programmation lourds et donc difficilement traitables par la machine.

L'invention a notamment pour but de remédier à ces problèmes en proposant un procédé permettant de réduire le temps de cycle de réalisation de microperforations, et donc le temps de cycle pour la fabrication du panneau décoré final.

A cet effet, l'invention a pour objet un procédé de fabrication d'une pièce de carrosserie de véhicule automobile comprenant les étapes suivantes :
- dépôt d'au moins un revêtement opaque sur au moins une partie d'une face d'un corps principal de la pièce de carrosserie, le corps principal étant en matière plastique transparente ou translucide, et
- réalisation d'un ensemble de microperforations du revêtement opaque par retrait du revêtement opaque à l'aide d'un faisceau laser irradiant localement le revêtement, une trajectoire d'irradiation du faisceau laser étant constituée uniquement de lignes de trajectoire successives sensiblement rectilignes.

On entend par « transparente », respectivement « translucide », le fait qu'une pièce est au moins transparente, respectivement translucide, à tout rayonnement lumineux présentant une longueur d'onde comprise dans le spectre visible, c'est-à-dire comprise entre environ 380 et 780 nm, ou à tout rayonnement infrarouge, c'est-à-dire d'une longueur d'onde comprise entre environ 780nm et 1 mm.

On entend par microperforations un enlèvement de la couche de peinture d'une dont la plus grande dimension de la surface irradiée est comprise entre 20 et 1 000 µm, de préférence entre 50 et 700 µm, de préférence entre 100 et 300 µm.

On entend par « irradier localement » un enlèvement de matière sur la totalité de l'épaisseur du revêtement. Le revêtement peut être une peinture, par exemple en trois couches (un primaire de 5 à 20 µm d'épaisseur, une base de 10 à 40 µm d'épaisseur et un vernis de 25 à 40 µm d'épaisseur, soit une épaisseur totale comprise entre 40 et 100 µm), un revêtement de métallisation d'une épaisseur pouvant être comprise entre 1 et 5 µm, une encre imprimée, un revêtement déposé par tampographie ou par sérigraphie, un film rapporté sur la pièce de carrosserie (et comprenant une encre, de la peinture, etc.), etc.. L'irradiation laser permet de retirer le revêtement sur toute son épaisseur (ou le revêtement présent sur le film en cas de pose d'un film, le film faisant office de support du revêtement), par exemple dans une gamme d'épaisseur comprise entre 1 et 100 µm pour les exemples d'épaisseur ci-dessus.

Ainsi, une réalisation de microperforations uniquement par des trajectoires d'irradiation ne comprenant que des lignes de trajectoires sensiblement rectilignes permet un gain de temps en simplifiant la trajectoire par rapport à une trajectoire selon l'art antérieur bien plus complexe et mélangeant des lignes rectilignes et courbées. De plus, la programmation d'une trajectoire comprenant uniquement des déplacements rectilignes est moins complexe à réaliser et plus facilement traitable par une machine que celle selon l'art antérieur.

Suivant d'autres caractéristiques optionnelles du procédé de fabrication prises seules ou en combinaison :
- la trajectoire d'irradiation comprend au moins en partie la répétition d'un même motif de lignes de trajectoire composé de plusieurs lignes de trajectoire successives sensiblement rectilignes ;
- au moins une ligne de trajectoire est composée de tronçons d'irradiation et de tronçon de non irradiation du revêtement opaque de sorte à permettre une réalisation d'au moins une partie de plusieurs microperforations ;
- une distance focale entre une source d'émission du faisceau laser et la face de la pièce de carrosserie est supérieure ou égale à comprise entre 100 et 1 000 millimètres, de préférence comprise entre 300 et 700 millimètres, de préférence comprise entre 400 et 600 millimètres ;
- la distance focale entre la source d'émission du faisceau laser et la face de la pièce de carrosserie est modifiée au sein de la trajectoire d'irradiation de la face de la pièce de carrosserie ;
- au moins une partie des microperforations est sensiblement en forme de parallélogramme, de préférence de forme sensiblement carrée ou sensiblement rectangulaire ;
- une largeur d'une bande de balayage du faisceau laser sur la face de la pièce de carrosserie est comprise entre 40 et 200µm, de préférence entre 70 et 120µm, de préférence sensiblement égale à 100µm
- le revêtement opaque est formé par au moins une couche de peinture, une encre imprimée, un revêtement de métallisation, un revêtement déposé par tampographie ou par sérigraphie ;

L'invention a également pour objet un dispositif de fabrication d'une pièce de carrosserie de véhicule automobile comprenant :
- au moins un organe de dépôt d'au moins un revêtement opaque sur au moins une partie d'une face d'un corps principal de la pièce de carrosserie, le corps principal étant en matière plastique transparente ou translucide, et
- au moins une source émettrice d'un faisceau laser configurée pour réaliser un ensemble de microperforations du revêtement opaque par retrait du revêtement opaque à l'aide d'un faisceau laser irradiant localement le revêtement opaque, la source émettrice du faisceau laser étant configurée pour réaliser une trajectoire d'irradiation du faisceau laser constituée uniquement de lignes de trajectoires successives sensiblement rectilignes.

Avantageusement, la source émettrice du faisceau laser est configurée pour faire varier la distance focale entre la source d'émission du faisceau laser et la face de la pièce de carrosserie au cours de l'irradiation de la face de la pièce de carrosserie.

### Brève description des figures

L'invention sera mieux comprise à la lecture de la description qui va suivre donnée uniquement à titre d'exemple et faite en se référant aux dessins annexés dans lesquels :
[Fig. 1] est une vue d'un panneau de carrosserie comprenant des microperforations réalisées par un procédé selon l'invention,
[Fig. 2] est une vue d'une portion d'une zone comprenant des microperforations réalisées par un procédé selon l'invention,
[Fig. 3] est une représentation d'une microperforation réalisée par un procédé selon un premier mode de réalisation de l'invention,
[Fig. 4] est une représentation d'une microperforation réalisée par un procédé selon un second mode de réalisation de l'invention, et
[Fig. 5] est une représentation d'un ensemble de microperforations comparables à la microperforation de la figure 4.

### Description détaillée

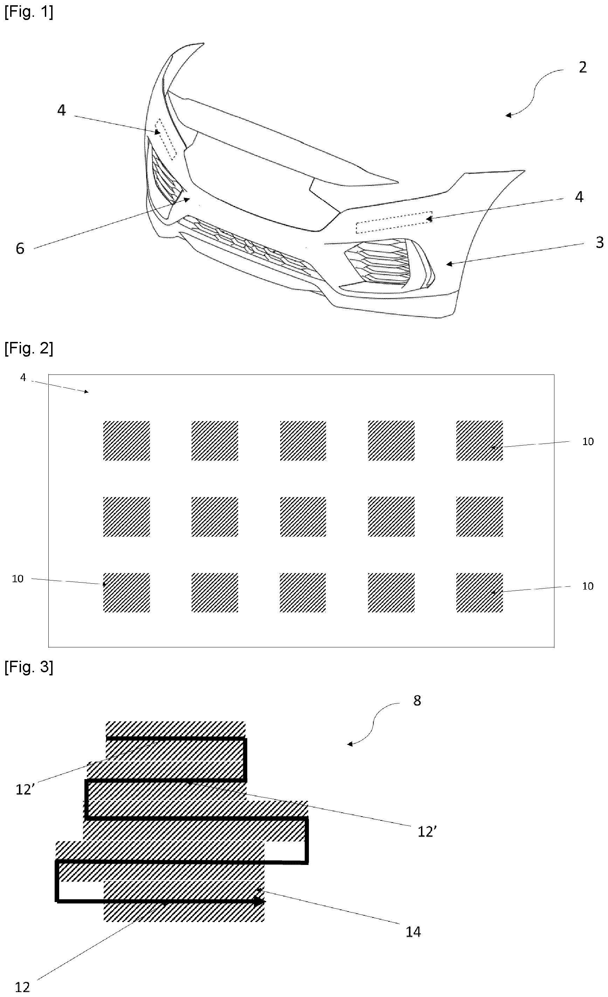

On a représenté sur la figure 1 une pièce de carrosserie 2 comprenant un corps principal 3 transparent ou translucide et des zones 4 de microperforations réalisées par un procédé selon l'invention, ainsi qu'à la figure 2 illustrant une portion d'une zone 4 de microperforations comprenant un ensemble de microperforations (ici des secondes microperforations 10 comme décrit par la suite).

La pièce de carrosserie 2 est, dans l'exemple illustré sur la figure 1, un parechocs avant. Bien entendu, il peut également s'agir de toute autre pièce de carrosserie, par exemple un hayon, une calandre, un parechocs arrière, etc. Il pourrait également s'agir d'une pièce rapportée sur un panneau de carrosserie.

La pièce de carrosserie 2 de la figure 1 comprend deux zones de microperforations. Bien entendu, le nombre de zones 4 de microperforations peut être différents, tout comme la ou les tailles des zones 4 de microperforations. Les zones 4 de microperforations peuvent être de même taille ou de tailles différentes, comprendre un nombre plus ou moins important de microperforations, etc.

Les zones 4 de microperforations peuvent être réalisées sur une face externe 6 et/ou sur une face interne (non visible sur la figure 1) de la pièce de carrosserie 2. On entend par face externe 6 la face de la pièce de carrosserie 2 visible depuis l'extérieur du véhicule lorsque la pièce de carrosserie 2 est montée sur un véhicule. On entend par face interne la face de la pièce de carrosserie 2 opposée à la face externe 36, et non visible depuis l'extérieur du véhicule lorsque la pièce de carrosserie 2 est montée sur un véhicule.

Les microperforations d'une zone 4 de microperforations sont réparties au niveau de la zone 4 de microperforations (la figure 2 illustre trois lignes de cinq microperforations), ont une/des formes différentes, une transparence (ou une translucidité) permettant de laisser passer les rayonnements émis par une source de lumière visible ou de rayonnement infrarouge et émis depuis l'arrière de la pièce de carrosserie 2 (i.e. face à la face interne du panneau de carrosserie 2), tout en ne permettant pas de voir au travers du panneau de carrosserie 2, notamment lorsqu'une source de lumière visible est inactive. Pour rappel, on entend par « transparente », respectivement « translucide », le fait qu'une pièce est au moins transparente, respectivement translucide, à tout rayonnement lumineux présentant une longueur d'onde comprise dans le spectre visible, c'est-à-dire comprise entre environ 380 et 780 nm, ou à tout rayonnement infrarouge, c'est-à-dire d'une longueur d'onde comprise entre environ 780nm et 1mm. La source de lumière visible est de préférence un dispositif optique comprenant des diodes électroluminescentes (LEDs). La source de rayonnement infrarouge peut être un LIDAR.

La pièce de carrosserie 2 est réalisée à l'aide d'un matériau transparent ou translucide à la lumière, tel que, à titre d'exemple et de manière non exclusive :
- du Polycarbonate (PC),
- du Polyméthacrylate de Méthyle (PMMA),
- de l'Acrylonite butadiène styrèen (ABS) ou encore du styrène acrilonitrile (SAN), de l'Acrilonitrile Styrène Acrylate (ASA) et leurs mélanges,
- des polyoléfines amorphes telles que les cyclo-oléfines copolymères (COC) ou les cyclo-oléfines-polymères (COP),
- du Polytéréphtalate d'éthylène (PET),
- du Polypropylène (PP),
- du Polyamide (PA),
- du Polytéréphtalate de butylène (PBT),
- du polyuréthane (PU), et
- du Polychlorure de vinyle (PVC).

Le procédé de réalisation de la pièce de carrosserie 2 (injection ou thermoformage par exemple) ou encore les dimensions et formes de la pièce de carrosserie 2 sont connus de l'homme du métier et ne feront pas l'objet d'une description détaillée ici.

Le procédé de fabrication selon l'invention comprend les étapes suivantes :
- Dépôt d'au moins un revêtement opaque sur au moins une partie d'une face du corps principal 3 de la pièce de carrosserie 2. Il peut par exemple s'agir d'une peinture (composée d'une seule couche ou de plusieurs couches), d'une encre, etc., comme cela a été décrit précédemment. De manière générale, il s'agit d'un revêtement qui ne laisse pas passer la lumière visible ou les rayonnements infrarouge émis par la source placée en arrière de la pièce de carrosserie 2 et dont il est possible de retirer localement la ou les couches de matériau opaque par utilisation d'un faisceau laser. Ce dépôt peut être effectué sur la face externe 6 ou sur la face interne de la pièce de carrosserie 2.
- Réalisation d'un ensemble de microperforations du revêtement opaque par retrait du revêtement opaque à l'aide d'un faisceau laser irradiant localement le revêtement opaque, une trajectoire d'irradiation du faisceau laser étant constituée uniquement de lignes de trajectoire successives sensiblement rectilignes. Dans le cadre de l'invention, un faisceau laser irradie une partie du revêtement opaque pour effectuer un enlèvement total, dans l'épaisseur (selon la définition fournie précédemment), du revêtement opaque au niveau de la ou des zones 4 de microperforations de ce dernier afin d'obtenir des microperforations transparentes ou translucides telles que décrites ci-dessus. Cet enlèvement du revêtement opaque permet de découvrir le corps principal 3, lui-même transparent ou translucide. La lumière visible ou les rayonnements infrarouge vont donc pouvoir passer au travers de la pièce de carrosserie 2, ici du panneau de carrosserie 2, au niveau des microperforations.

La tailles des microperforations ainsi que leur disposition des unes par rapport aux autres (par exemple la distance entre deux microperforations adjacentes) sont choisies de manière à obtenir l'effet recherché et décrit ci-dessus, à savoir de laisser passer les rayonnements émis sans pour autant voir au travers de la pièce de carrosserie 2 depuis l'extérieur, notamment lorsqu'une source de lumière visible est éteinte. La source du faisceau laser est paramétrée pour obtenir des microperforations de forme(s) et de taille(s) voulues, l'espacement voulu entre les microperforations ou encore une transparence voulue au niveau des microperforations. Les paramètres réglés sont notamment les suivants :
- La distance focale entre la source du faisceau laser et la pièce de carrosserie 2.
- La puissance du faisceau laser.
- La vitesse de balayage des zones 4 de microperforations.
- Le temps d'exposition d'une zone à irradier à l'aide faisceau laser.
- Le recouvrement ou non de lignes de trajectoire, ainsi que le pourcentage de recouvrement entre des lignes de trajectoire.
- L'alternance ou non de lignes de trajectoire correspondant à une irradiation ou non, ou la présence au sein d'une même ligne de trajectoire de tronçons d'irradiation et de non irradiation.
- La fréquence du laser quand le laser est un laser pulsé.
- La longueur d'onde de la source laser.

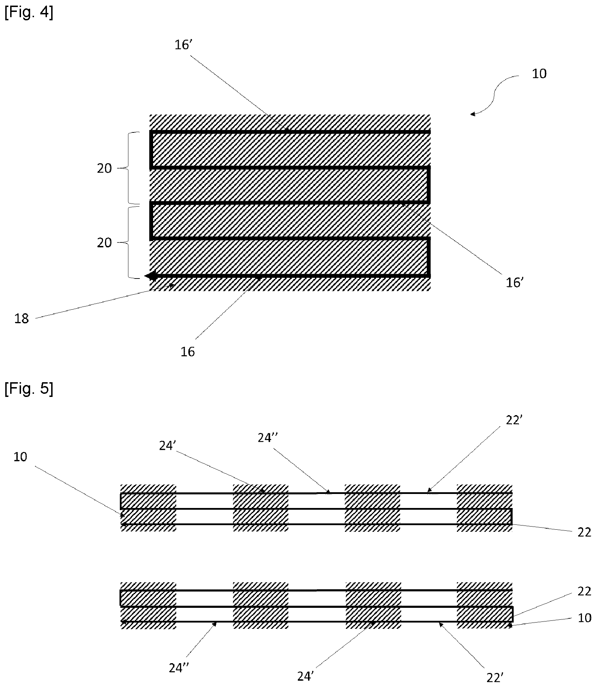

Les figures 3 et 4 illustrent deux microperforations 8 et 10 de formes différentes. La figure 3 illustre une première microperforation 8 selon un premier mode de réalisation de l'invention, ici de forme quelconque. Une première trajectoire 12, ne comprenant que des premières lignes de trajectoires 12' (deux référencées sur la figure 3) sensiblement rectilignes, permet d'obtenir la première microperforation 8. La première trajectoire 12 est constituée de plusieurs premières lignes de trajectoires 12' qui peuvent être similaires ou non et qui permette d'obtenir une première surface irradiée 14, formant la première microperforation 8.

La figure 4 illustre une seconde microperforation 10 selon un second mode de réalisation de l'invention. Une seconde trajectoire 16, ne comprenant que des secondes lignes de trajectoires 16' (deux référencées sur la figure 4) sensiblement rectilignes, permet d'obtenir la seconde microperforation 10. La seconde trajectoire 16 est constituée de plusieurs lignes de trajectoires présentant des tronçons sensiblement identiques et alignés afin d'obtenir une seconde zone irradiée 18 de forme rectangulaire. Selon le second mode de réalisation de l'invention, la trajectoire d'irradiation (ici la seconde trajectoire d'irradiation 16) comprend au moins en partie la répétition d'un même motif 20 de lignes de trajectoire composé de plusieurs lignes de trajectoire (ici les secondes lignes de trajectoire 16') successives rectilignes (deux motifs 20 successifs sont référencés sur la figure 1). La répétition d'un même motif permet de simplifier encore plus la programmation des mouvements de la source du faisceau laser.

La figure 5 illustre un ensemble de secondes microperforations 10 formant deux groupes de secondes microperforations 10 alignées. Ensemble, ces huit perforations 10 forment au moins une portion d'une zone de microperforations 4. Dans cet exemple, une troisième ligne de trajectoire 22 permet de réaliser une ligne entière de seconde microperforations 10. Bien entendu, le nombre de trajectoires pour réaliser un ensemble de microperforations peut varier. Il serait par exemple possible de réaliser toutes les microperforations illustrées sur la figure 5 par l'intermédiaire d'une seule trajectoire.

La troisième trajectoire 22 est composée, comme les première et seconde trajectoires 12 et 16, de troisièmes lignes de trajectoires 22' rectilignes. Cependant, au moins une partie des troisièmes lignes de trajectoire 22' (les lignes de trajectoire horizontales sur la figure 4) comprend des tronçons d'irradiation 24' et des tronçons de non irradiation 24". Dans ce mode de réalisation, l'alternance de tronçons d'irradiation 24' et des tronçons de non irradiation 24" permet qu'au moins une troisième ligne de trajectoire 22' (les lignes de trajectoire horizontales sur la figure 4) permet une réalisation d'au moins une partie de plusieurs secondes microperforations 10. Dans l'exemple de la figure 4, toutes les troisièmes lignes de trajectoire 22' horizontales participent à la réalisation des secondes microperforations 10 d'un même groupe de microperforations en alternant les tronçons d'irradiation 24' et de non irradiation 24". Un alignement d'au moins une partie des secondes microperforations 10 permet de faciliter la mutualisation de la réalisation desdites microperforations.

De préférence, la distance focale entre une source d'émission du faisceau laser et la face de la pièce de carrosserie est comprise entre 100 et 1 000 millimètres, de préférence comprise entre 300 et 700 millimètres, de préférence comprise entre 400 et 600 millimètres. La mise en place d'une distance focale élevée permet d'obtenir un point d'impact du faisceau laser sur la pièce de carrosserie 2 de plus grandes dimensions, et donc de limiter le nombre et/ou l'amplitude de mouvements du faisceau laser à mettre en oeuvre pour réaliser une ou des microperforations. Une distance focale importante permet également de balayer une plus grande zone de la pièce de carrosserie 2 par simples mouvements de la ou des lentilles de la source de laser sans avoir à déplacer trop souvent la source du faisceau laser d'une zone à balayer vers une autre (déplacement nécessaire lorsque la source du faisceau laser atteint sa limite spatiale de traitement d'une zone de la pièce de carrosserie 2 par simples mouvements de la lentille). On privilégie donc un déplacement angulaire du faisceau laser alors qu'un organe porteur de la source du faisceau laser, par exemple un bras de robot, est fixe. On limite ainsi les déplacements dudit organe porteur en augmentant la surface pouvant être irradiée par simple mouvement de la lentille de la source du faisceau laser. Il est même possible de réduire le nombre de sources de faisceau laser à utiliser pour traiter une surface donnée dans un temps imparti devant être respecté.

Il est possible de faire une forme de microperforations facilement réalisable par une trajectoire selon l'invention, et ce afin de réduire encore plus le temps de fabrication de la pièce de carrosserie 2. Au moins une partie des microperforations a une forme dont au moins un côté est parallèle à une ligne de trajectoire. C'est le cas pour les microperforations des figures 2 à 5. De préférence, au moins une partie des microperforations sont sensiblement en forme de parallélogramme, de préférence de forme carrée ou sensiblement rectangulaire. Il s'agit de formes très simples à réaliser par un procédé selon l'invention, comme le démontrent les trajectoires d'irradiation simples sur les figures 3 et 4.Comme expliqué, auparavant, il peut être intéressant d'avoir un point d'impact du faisceau laser sur la face de la pièce de carrosserie assez important pour les raisons évoquées ci-dessus (augmentation de la taille d'une surface irradiée par simple mouvements angulaires de la lentille). De manière plus générale, il est intéressant de déterminer une taille du point d'impact permettant d'optimiser le balayage d'une zone à irradier, tout en s'assurant d'une taille permettant de réaliser des microperforations de la forme souhaitée, en respectant les vitesses d'irradiation, les temps d'irradiation ou encore le chevauchement entre deux lignes de trajectoire d'irradiation. Pour ce faire, la largeur d'une bande de balayage du faisceau laser sur la face de la pièce de carrosserie est comprise entre 40 et 200µm, de préférence entre 70 et 120µm, de préférence sensiblement égale à 100µm

L'invention a également pour objet un dispositif de fabrication d'une pièce de véhicule comprenant :
- Au moins un organe de dépôt d'au moins un revêtement opaque sur au moins une partie d'une face d'un corps principal 3 de la pièce de carrosserie 2, le corps principal 3 étant en matière plastique transparente ou translucide. Il peut s'agir d'un robot d'application de peinture, ou encore de moyens de dépôt d'un film opaque.
- Au moins une source émettrice d'un faisceau laser configurée pour réaliser un ensemble de microperforations du revêtement opaque par retrait du revêtement opaque à l'aide d'un faisceau laser irradiant localement le revêtement opaque, la source émettrice du faisceau laser étant configurée pour réaliser une trajectoire d'irradiation du faisceau laser constituée uniquement de lignes de trajectoires successives sensiblement rectilignes.

Avantageusement, la source émettrice du faisceau laser est configurée pour pouvoir faire varier la distance focale entre la source d'émission du faisceau laser et la face de la pièce de carrosserie 2 au cours de l'irradiation de la face de la pièce de carrosserie 2, et ce pour des raisons évoquées plus haut.

### Liste de références

- 2 :: pièce de carrosserie
- 3 :: corps principal
- 4 :: zones de microperforations
- 6 :: face externe
- 8 :: première microperforation
- 10 :: seconde microperforation
- 12 :: première trajectoire
- 12' :: premières lignes de trajectoire
- 14 :: première surface irradiée
- 16 :: seconde trajectoire
- 16' :: secondes lignes de trajectoire
- 18 :: seconde surface irradiée
- 20 :: motifs de lignes de trajectoire
- 22 :: troisième trajectoire
- 22' :: troisièmes lignes de trajectoire
- 24' :: tronçons d'irradiation
- 24" :: tronçons de non irradiation

## Revendications

1. Procédé de fabrication d'une pièce de carrosserie (2) de véhicule automobile **caractérisé en ce qu'**il comprend les étapes suivantes :
- dépôt d'au moins un revêtement opaque sur au moins une partie d'une face (6) d'un corps principal (3) de la pièce de carrosserie (2), le corps principal (3) étant en matière plastique transparente ou translucide, et
- réalisation d'un ensemble de microperforations (8, 10) du revêtement opaque par retrait du revêtement opaque à l'aide d'un faisceau laser irradiant localement le revêtement opaque, une trajectoire d'irradiation (12, 16, 22) du faisceau laser étant constituée uniquement de lignes de trajectoires (12', 16', 22') successives sensiblement rectilignes.

2. Procédé de fabrication selon la revendication 1, dans lequel la trajectoire d'irradiation (12, 16, 22) comprend au moins en partie la répétition d'un même motif de lignes de trajectoire (20) composé de plusieurs lignes de trajectoire (16') successives sensiblement rectilignes.

3. Procédé de fabrication selon l'une quelconque des revendications précédentes, dans lequel au moins une ligne de trajectoire (22') est composée de tronçons d'irradiation (24') et de tronçon de non irradiation (24") du revêtement opaque de sorte à permettre une réalisation d'au moins une partie de plusieurs microperforations (10).

4. Procédé de fabrication selon l'une quelconque des revendications précédentes, dans lequel une distance focale entre une source d'émission du faisceau laser et la face (6) de la pièce de carrosserie (2) est supérieure ou égale à comprise entre 100 et 1 000 millimètres, de préférence comprise entre 300 et 700 millimètres, de préférence comprise entre 400 et 600 millimètres.

5. Procédé de fabrication selon l'une quelconque des revendications précédentes, dans lequel la distance focale entre la source d'émission du faisceau laser et la face (6) de la pièce de carrosserie (2) est modifiée au sein de la trajectoire d'irradiation (12, 16, 22) de la face (6) de la pièce de carrosserie (2).

6. Procédé de fabrication selon l'une quelconque des revendications précédentes, dans lequel au moins une partie des microperforations (8, 10) sont sensiblement en forme de parallélogramme, de préférence de forme sensiblement carrée ou sensiblement rectangulaire.

7. Procédé de fabrication selon l'une quelconque des revendications précédentes, dans lequel une largeur d'une bande de balayage du faisceau laser sur la face de la pièce de carrosserie est comprise entre 40 et 200µm, de préférence entre 70 et 120µm, de préférence sensiblement égale à 100µm.

8. Procédé de fabrication selon l'une quelconque des revendications précédentes, dans lequel le revêtement opaque est formé par au moins une couche de peinture, une encre imprimée, un revêtement de métallisation, un revêtement déposé par tampographie ou par sérigraphie .

9. Dispositif de fabrication d'une pièce de carrosserie de véhicule automobile comprenant :
- Au moins un organe de dépôt d'au moins un revêtement opaque sur au moins une partie d'une face (6) d'un corps principal (3) de la pièce de carrosserie (2), le corps principal (3) étant en matière plastique transparente ou translucide, et
- Au moins une source émettrice d'un faisceau laser configurée pour réaliser un ensemble de microperforations du revêtement opaque par retrait du revêtement opaque à l'aide d'un faisceau laser irradiant localement le revêtement opaque, la source émettrice du faisceau laser étant configurée pour réaliser une trajectoire d'irradiation (12, 16, 22) du faisceau laser constituée uniquement de lignes de trajectoires (12', 16', 22') successives sensiblement rectilignes.

10. Dispositif de fabrication selon la revendication précédente, dans lequel la source émettrice du faisceau laser est configurée pour faire varier la distance focale entre la source d'émission du faisceau laser et la face (6) de la pièce de carrosserie (2) au cours de l'irradiation de la face (6) de la pièce de carrosserie (2).
